# EUROPEAN PATENT APPLICATION

(11) **EP 4 461 535 A1**
(43) Date of publication of application: **13.11.2024**
(21) Application number: 23171999.8
(22) Date of filing: 08.05.2023
(51) Int. Cl.: B33Y 70/00, C22C 33/02, C22C 38/00, C22C 38/02, C22C 38/04, C22C 38/22, C22C 38/24, C22C 38/26, C22C 38/28, C22C 38/32, B22F 1/052, B22F 1/065

(54) **STEEL POWDER FOR USE IN ADDITIVE MANUFACTURING PROCESSES**

(71) Applicant: SSAB Technology AB, 101 21 Stockholm (SE)
(72) Inventor: Broberg, Gunnar, 613 80 Oxelösund (SE); Fager, Ulrika, 613 80 Oxelösund (SE); Mikaelsson, Fredrik, 613 80 Oxelösund (SE); Haglund, Teodor, 613 80 Oxelösund (SE)
(74) Representative: Valea AB

(57) **Abstract**

A steel powder intended to be used in additive manufacturing, having a composition which comprises in wt.-%:
C
0.15 - 0.26,
Si
0.5-1.5,
Mn
0.5 - 1.0,
Cr
0.5-1.5,
Mo
0.1- 0.4,
N
0.006 - 0.025,

optionally V equal to or less than 0.15,
optionally Nb equal to or less than 0.03,
optionally Ti equal to or less than 0.02,
optionally B equal to or less than 0.005,

balance Fe and unavoidable impurities;
wherein the unavoidable impurities Ni, P and S are limited to:
Ni
equal to or less than 0.15,
P
max 0.03, and
S
max 0.005.

## Description

### TECHNICAL FIELD

The present disclosure relates in general to steel powder for use in additive manufacturing processes. The present disclosure further relates in general to the use of said powder, and to a method for producing a component by additive manufacturing.

### BACKGROUND

Additive manufacturing (AM), sometime referred to as additive layer manufacturing (ALM), is a technology for producing three-dimensional objects, for example of metal, layer by layer. One of the main advantages of additive manufacturing is that it enables producing objects having a very complex design, which may be very difficult or even impossible to produce by other methods. Thus, additive manufacturing opens up new possibilities for producing objects which may have a better configuration for its intended use. For example, tools comprising non-straight internal channels for cooling mediums may be achieved. Such channels may not be possible to produce by other methods, such as drilling.

Additive manufacturing is a generic term encompassing various different processes. Examples of such processes include laser powder bed fusion (L-PBF), sometimes also referred to as selective laser melting, and directed energy deposition (DED). In L-PBF a thin powder layer is first applied on a building platform. This takes place inside a tight chamber that contains inert gas, for example argon or nitrogen, with extremely low oxygen levels. A laser beam selectively melts the layer of powder. Then the platform is gradually lowered, and a new powder layer is applied. After that, the laser beam melting operation is repeated. The process is repeated until the desired component has been obtained, and may be removed from the powder bed. In contrast, in directed energy deposition, the material feedstock, which may be either a powder or a wire, is melted by a heat source and deposited in melted form onto a specified surface where it solidifies and thereby fuses with a previously formed layer. Examples of heat sources in directed energy deposition include laser, electron beam or a gas-tungsten arc. This process is also typically performed in a controlled chamber with reduced oxygen levels.

Additive manufacturing is an emerging market and much research is therefore focused on the development of powders that may be used therefore. Since the metallurgy during additive manufacturing is very different from the metallurgy during conventional manufacturing methods, such as casting, due to the surface chemistry of the powder as well as the remelting occurring during formation of the layers, *inter alia* the composition of the powder must be adapted to allow good printability. This is one of the major difficulties when desiring to utilize additive manufacturing in the production of components which, in addition to a particular design, should be able to meet for example pre-identified mechanical requirements.

WO 2020/221812 A1 discloses a steel material in powder form, intended for selective laser melting or selective laser sintering, having the following composition: C 0.17-0.23%, Si 0.10-0.80%, Mn 0.15-0.45%, P ≤ 0.03%, S ≤ 0.015%, Cr 0.8-2.0%, Mo 0.15-0.80%, Ni 0.1-2.0%, V 0.1-2.0%, the remainder iron, optional elements and unavoidable smelting-related impurities.

### SUMMARY

The object of the present invention is to provide a steel powder which has a good printability such that it may be used in additive manufacturing, and which results in good mechanical properties of a component produced thereof.

The object is achieved by the subject-matter of the appended independent claim(s). Embodiments are defined by the dependent claims.

In accordance with the present disclosure, a steel powder for use in additive manufacturing processes is provided. The steel powder has the following composition in percent by weight (wt.-%):

| | |
|---|---|
| C | 0.15 - 0.26, |
| Si | 0.5 - 1.5, |
| Mn | 0.5 - 1.0, |
| Cr | 0.5 - 1.5, |
| Mo | 0.1 - 0.4, |
| N | 0.006 - 0.025 |

optionally V equal to or less than 0.15,
optionally Nb equal to or less than 0.03,
optionally Ti equal to or less than 0.02,
optionally B equal to or less than 0.005,
balance Fe and unavoidable impurities;
wherein the unavoidable impurities Ni, P and S are limited to:

| | |
|---|---|
| Ni | equal to or less than 0.15, |
| P | equal to or less than 0.03, and |
| S | equal to or less than 0.005. |

The steel powder is suitable for additive manufacturing since it has good printability, and results in a good combination of strength, hardness, toughness and high level of isotropy in a component already in the as-built condition. For example, in the as-built condition, a yield strength of at least 1050 MPa, a tensile strength of at least 1150 MPa, a hardness of at least 325 HV, and an impact toughness (Charpy V) of at least 100 J at room temperature may be achieved.

The steel powder may be a nitrogen gas-atomized powder.

Furthermore, the steel powder may have a sphericity of at least 0.85 when determined according to ISO 9276-6:2008. Alternatively, or additionally, the steel powder may have an aspect ratio of at least 0.75 determined after dynamic image analysis according to ISO 13322-2:2006.

The present disclosure also relates to the use of said steel powder in the production of components by additive manufacturing. The additive manufacturing process used may for example be directed energy deposition (DED) or laser bed powder bed fusion (L-PBF).

Moreover, the present disclosure relates to a method for producing a component comprising performing additive manufacturing using the above-described steel power.

### DETAILED DESCRIPTION

The invention will be described in more detail below with reference to exemplifying embodiments. The invention is however not limited to the exemplifying embodiments discussed, but may be varied within the scope of the appended claims.

When ranges are disclosed in the present disclosure, such ranges include the end values of the range, unless explicitly disclosed otherwise. Similarly, if an open range is disclosed, the open range also include the single end value of the open range, unless explicitly disclosed otherwise.

The present disclosure provides a steel powder, more specifically a tool and engineering steel powder, which is intended to be used in one or more additive manufacturing processes. The steel powder is particularly useful for use in directed energy deposition processes or in laser powder bed fusion processes. The steel powder has a composition which comprises, in percent by weight (wt.-%):

| | |
|---|---|
| C | 0.15 - 0.26, |
| Si | 0.5 - 1.5, |
| Mn | 0.5 - 1.0, |
| Cr | 0.5 - 1.5, |
| Mo | 0.1 - 0.4, |
| N | 0.006 - 0.025, |

optionally V equal to or less than 0.15,
optionally Nb equal to or less than 0.03,
optionally Ti equal to or less than 0.02,
optionally B equal to or less than 0.005,
balance Fe and unavoidable impurities;
wherein the unavoidable impurities Ni, P and S are limited to:

| | |
|---|---|
| Ni | equal to or less than 0.15, |
| P | max 0.03, and |
| S | max 0.005. |

In the following, the importance of the different alloying elements of the steel powder will be briefly discussed. All percentages for the chemical composition are given in weight-% (wt.-%), unless explicitly disclosed otherwise. Upper and lower limits of the individual elements of the composition can be freely combined within the broadest limits set out in the claims, unless explicitly disclosed otherwise.

### Carbon (C): 0.15 - 0.26 %

Carbon is an element added primarily to achieve a desired hardness and strength of a component produced from the steel power. If the content of carbon is too low, the mechanical properties, such as hardness and mechanical strength, will be inferior. Furthermore, a too low carbon content will increase the melting temperature of the material, hence making the atomizing more complex. Therefore, carbon is present in an amount of at least 0.15 %. Preferably, the carbon content is at least 0.18 %.

However, too high amounts of carbon may result in increased residual stresses in the component produced by additive manufacturing. This in turn increases the risk for distortion of the component. Therefore, carbon should not be added in amounts above 0.26 %. Preferably, the carbon content is equal to or less than 0.25 %, or even equal to or less than 0.24 %.

### Silicon (Si): 0.5 - 1.5 %

Silicon is commonly used in the steel making industry for its ability to deoxidize the steel, and may therefore be found in almost any steel composition. Furthermore, alloying with silicon increases the hardness of the material as it may contribute to solid-solution strengthening. Silicon may also suppress formation of cementite in the material. Addition of silicon may also enhance weldability. Since many AM processes melts and welds the material on micron scale, silicon also enhances the material processing in these processes. Therefore, the present composition comprises at least 0.5 % silicon. Preferably, the silicon content is at least 0.6 %, or even more preferably at least 0.85 %.

However, too high contents of silicon may decrease the impact fracture toughness of the material of the produced component. For said reason, silicon should not be added in amounts above 1.5 %. Preferably, silicon is present in an amount of equal to or less than 1.2 %, or even more preferred in an amount of equal to or less than 1.15 %.

### Manganese (Mn): 0.5 - 1.0 %

Manganese may be added in order to increase the hardness. Manganese also stabilizes the austenite phase and delays transformation of austenite during cooling. The present composition comprises at least 0.5% manganese in order to achieve essentially complete martensite transformation and desired hardness. Such a content of manganese also has the advantage of reducing the risk for formation of other harmful metal sulfides, such as FeS that may otherwise lead to embrittlement. Manganese may preferably be present in an amount of at least 0.55 %, or even more preferably in an amount of at least 0.60 %.

However, manganese should not be added in contents above 1.0 % as this may result in segregation in the component produced from the steel powder. Such segregations may affect the microstructure and hence the mechanical properties negatively. Furthermore, too high manganese content may result in a relatively large amount of retained austenite. This may in turn lead to tempering embrittlement and dimensional instability of the produced component. Manganese may suitably be present in an amount of equal to or less than 0.90 %, or equal to or less than 0.85 %.

### Chromium (Cr): 0.5 - 1.5 %

Chromium may be added for the purpose of increasing hardenability. Furthermore, addition of chromium also contributes to increased hardness of the material of the produced component, especially at elevated temperature, such as above 200 °C or 300 °C. In order to achieve a martensitic microstructure in the component produced from the steel powder, the present composition comprises at least 0.5 % chromium. Chromium may suitably be added in an amount of at least 0.8 %, or even at least 0.85 %.

However, too high additions of chromium results in a decrease in weldability and therefore has a negative effect on printability. For said reason, the chromium content should not exceed 1.5 %. Preferably, chromium is present in an amount of equal to or less than 1.3 %. Suitably, chromium may be present in an amount of equal to or less than 1.20 %.

### Molybdenum (Mo): 0.1 - 0.4 %

Molybdenum is a strong carbide formed and forms carbides that are temperature stable. By adding molybdenum, increased heat softening resistance may be achieved. This in turn enables the component produced from the steel powder to maintain its mechanical properties also at elevated temperatures, such as well above 200 °C or 300 °C. Therefore, the present composition comprises at least 0.1% molybdenum. According to one embodiment, the composition comprises at least 0.15 % molybdenum.

However, molybdenum should not be added in too high amounts since this may result in undue consumption of carbon and therefore reduction in the contribution of carbon to the overall properties of the composition. Moreover, molybdenum may increase the alloying costs. Therefore, molybdenum should not be present in amounts above 0.4%. Preferably, molybdenum is present in an amount of equal to or less than 0.35 %.

### Nitrogen (N): 0.006 - 0.025 %

Nitrogen is an element contributing to strength and hardness of the component produced from the steel powder through solution strengthening and/or formation of small nitrides. Therefore, the herein described steel powder comprises equal to or more than 0.006 % of nitrogen. Nitrogen may suitably be introduced into the powder by selection of the atomizing medium and control of the parameters used during atomization. Preferably, nitrogen is present in an amount of equal to or higher than 0.007%. More preferably, nitrogen may be present in an amount of equal to or higher than 0.008%. The nitrogen content may alternatively be equal to or higher than 0.010%.

However, too high amounts of nitrogen may lead to formation of unduly large nitrides which could significantly reduce the toughness. Therefore, the herein described steel powder comprises equal to or less than 0.025% of nitrogen. Suitably, nitrogen is present in an amount of equal to or less than 0.020%, or equal to or less than 0.016%.

### Vanadium (V): optionally up to 0.15 %

Vanadium may optionally be added to the composition according to the present disclosure or may be present as a result of the raw material used for producing the steel powder. Vanadium is a strong carbide former which forms small dispersed carbides in the matrix. These carbides provide an increased hardness without negatively affecting the toughness as long as the content of vanadium is not too high. Therefore, vanadium may, if desired, be present in an amount of equal to or less than 0.15%. Suitably, vanadium, if added, may be present in an amount of equal to or less than 0.12 %. Moreover, if added, vanadium may suitably be present in an amount of at least 0.05% or at least 0.07%, although lower amounts are also plausible.

### Niobium (Nb): optionally up to 0.03 %

Niobium may optionally be added to the composition according to the present disclosure or may be present as a result of the raw material used for producing the steel powder. Like vanadium, niobium is a strong carbide former. However, niobium carbides are precipitated at higher temperatures and may be coarser than vanadium carbides. Therefore, niobium carbides may be more difficult to dissolve than vanadium carbides. Too high contents of niobium may reduce the toughness without further increasing the strength of the material. If present, niobium should not exceed 0.03 %.

### Titanium (Ti): optionally up to 0.02 %

Titanium may optionally be added to the present composition, for example for the purpose of increasing strength. Titanium may also be added for the purpose of avoiding or reducing formation of boron nitrides. However, addition of titanium may lead to increased risk for formation of titanium nitride and titanium carbide, which is harmful for the toughness of the material. Therefore, the titanium content in the present composition is equal to or less than 0.02 %.

Here it should be noted that TiC and TiN nucleates at higher temperatures. The large cooling rates related to some additive manufacturing methods, like L-PFB, make the material cool fast enough through the temperature window where TiC and TiN particles nucleates. Therefore, additions of small amounts of titanium are plausible.

### Boron (B): optionally up to 0.005 %

If desired, boron may be added for the purpose of increasing hardenability. Boron may therefore be present in the present composition in an amount of equal to or less than 50 ppm. At amounts above 50 ppm, boron loses its effect on hardenability.

### Unavoidable impurities

In the present disclosure, unavoidable impurities are considered to be impurities resulting from the manufacturing process and/or the raw material used.

Nickel is an element frequently used for the purpose of increasing hardenability and also material toughness. Nickel is however an expensive alloying element and may in the present composition lead to an increase in retained austenite. Therefore, in the present composition, nickel is one example of an unavoidable impurity. Nickel may typically be present as a result of the raw material used for producing the steel powder. Nickel may be present in an amount of equal to or less than 0.15%.

Another example of an unavoidable impurity is phosphorus (P). Phosphorous may have a negative effect on the mechanical properties. Therefore, the phosphorus content is limited to at most 0.03 %. Preferably, the phosphorous content should be limited to equal to or less than 0.01 %.

Another example of an unavoidable impurity is sulfur (S). Sulfur is an unwanted element that in combination with other elements forms sulfides. These sulfides can drastically reduce the toughness of the steel. In some tool steels, higher amounts of sulfur may be allowed or even added to increase machinability, but since additive manufacturing is a near net shaping process this is not necessary for the present steel powder. In the present composition, it is important that the sulfur content does not exceed 0.005%. In order to reduce the negative effects on the mechanical properties, the sulfur content should be kept as low as possible. Therefore, the sulfur content is preferably limited to equal to or less than 0.002%.

Other examples of possible unavoidable impurities include aluminum (Al), copper (Cu), oxygen (O), and calcium (Ca). Suitably, the Al content should be less than 700 ppm, the Cu content should be less than 0.25%, the O content should be less than 500 ppm, and/or the calcium content should be less than 50 ppm.

The above-described steel powder may be produced by atomizing a melt of a steel alloy. Such a steel alloy may for example be produced via refining of crude iron (also known as pig iron) in a basic oxygen furnace (BOF), alternatively melting of for example scrap in an electric arc furnace (EAF), followed by additional alloying in for example a ladle furnace to thereby arrive at a steel alloy which, at least after atomization, would result in the desired composition. The steel alloy may thereafter be melted in an induction furnace. Preferably, said melting is performed under inert protective gas atmosphere, e.g. argon. The protective gas is important in order to limit pick up of oxygen in the melt. When the melt has reached a desired temperature, the molten metal may be transferred to an atomizing nozzle. In general, this is achieved by tilting the induction furnace, or by opening a stopper rod blocking an outlet of the induction furnace.

Atomization is performed by subjecting the melt leaving the atomizing nozzle to an atomization medium. The atomization medium is used to break up the molten stream into fine metal droplets which are thereafter quickly cooled down so as to form metal power particles. Said metal power particles may typically have a size less than 1 mm. Preferably, the atomization parameters may be controlled such that the obtained metal powder particles have a size of less than about 200 µm. The atomization medium is preferably nitrogen. However, mixtures containing nitrogen gas, such as nitrogen and argon, are also plausible atomization mediums.

It should be noted that in general, the powder obtained by the atomization process may need to be further processed in order to be suitable for use in an additive manufacturing process. More specifically, it may be needed to further process the obtained powder so as to arrive at a suitable particle size distribution in the powder. In order to obtain the desired powder fractions, the powder can be put through a sieving operation or be air classified, or a combination thereof. During sieving, the powder is transferred trough a mesh with a defined opening size. Particles larger than the opening will stay on top of the mesh and the ones that are smaller will be transferred through. The cut point can be chosen by adjusting the mesh opening size. To gain the target particle size distribution, the material can be directly sieved. Alternatively, powders with two or several particle size intervals can be mixed, if desired.

Different AM processes use powders with different target particle size intervals. For usage in a directed energy deposition process, a powder particle size between 45-150 µm is suitable, where the lower limit of the interval indicates the D10 value and the upper limit of the interval indicates the D90 value. D10 represents that the portion of particles with diameters smaller than this value is 10%, and D90 represents that the portion of particles with diameters smaller than this value is 90%. For usage in L-PBF (laser powder bed fusion) a powder particle size of 15-63 µm or even 15-45 µm can be used, where the lower limit of the interval indicate the D10 value and upper limit of the interval indicate the D90 value. Particle size distribution may be determined according to ISO 13322-2.

A more spherical powder enhances the printability of the powder since it improves the flowability of the powder. A good flowability for example allows the powder to be more closely packed in the layer which is subsequently melted during an AM process, which in turn for example leads to lower risk for porosity of the as-built material. Sphericity is defined as SPHT=4πA/P², where A is the measured area covered by a particle projection, P is the measured perimeter/circumference of a particle projection. A sphericity of 1 means that the particle is a perfect sphere. The mean sphericity of the material should be 0.85 or greater, preferably larger than 0.90. Sphericity may be determined according to ISO 9276-6:2008. The sphericity of the powder is primarily a result of the process for manufacturing the powder.

A component produced by additive manufacturing using the herein described steel powder will typically obtain a microstructure comprising at least 90 vol.-% martensite already in the as built condition. Subjecting the as built component to one or more heat treatments, such as quenching followed by tempering, may increase the amount martensite further and reduce the amount of retained austenite.

The herein described steel powder may be used for producing a large variety of components, intended for a wide variety of applications ranging from injection molding to general engineering components and automotive components.

For the purpose of illustration, it will in the following be described how the steel powder according to the present disclosure can be processed in an L-PBF 3D-printer.

The steel powder is easily processed in L-PBF, and allows for a wide span of parameters to be used while still achieving a relative density of the component produced larger than 99.5 wt.%. Examples of process parameters that may suitably be changed as desired include laser power, laser scanning speed, powder layer thickness and hatching distance. All these parameters together influence the energy input. It is possible to vary the laser power between 214-285 W and the scanning speed between 600-1000 mm/s and still achieve a relative density above 99.5%, this when applying a hatch distance of 0.12 mm and a powder layer thickness of 0.03 mm, resulting in a volumetric energy input between 65 and 110 J/mm³. Other combinations of printing parameters can also be used to achieve a relative density above 99.5%. The broad span of usable parameters indicates that the steel powder according to the present disclosure has a high degree of printability.

Once printed, the material of the produced component can preferably be used in as built condition. However additional heat treatment, such as tempering or quenching and tempering, can be made, if desired. Additional heat treatments lower the levels of residual stresses and possible anisotropy in mechanical properties.

### Experimental results

Four different steel powders, having compositions as specified in Table 1, were produced by atomization of a melt using nitrogen gas as atomizing medium.

Samples of the obtained powders were examined by Light Optical Microscopy at the 50x, 100x, 200x and 500x magnification to evaluate *inter alia* particle shape and investigate whether the particles contained any internal pores. For said purpose, the samples were cast into Polyfast, and polished according to conventional technologies. It was found that the particles for all obtained powders were essentially spherical and substantially free from internal pores within the particles.

**Table 1.**

| | **Alloy 1** | **Alloy 2** | **Alloy 3** | **Alloy 4** |
|---|---|---|---|---|
| C | 0.21 | 0.21 | 0.21 | 0.21 |
| Si | 1.06 | 1.06 | 1.03 | 1.02 |
| Mn | 0.74 | 0.73 | 0.73 | 0.73 |
| P | 0.006 | 0.006 | 0.007 | 0.007 |
| S | 0.001 | 0.001 | 0.001 | 0.001 |
| Cr | 1.04 | 1.03 | 1.04 | 1.04 |
| Ni | 0.11 | 0.11 | 0.08 | 0.06 |
| Mo | 0.19 | 0.19 | 0.20 | 0.21 |
| V | 0.10 | 0.10 | 0.10 | 0.10 |
| Ti | 0.008 | 0.006 | 0.006 | 0.006 |
| Cu | 0.006 | 0.006 | 0.006 | 0.006 |
| Al | 0.007 | 0.002 | 0.003 | 0.003 |
| N | 0.0121 | 0.0101 | 0.0093 | 0.0091 |
| Nb | 0.016 | 0.015 | 0.016 | 0.016 |
| B | 0.0021 | 0.0020 | 0.0022 | 0.0020 |

The steel powder according to Alloy 2 was thereafter sieved to obtain a desired size distribution. Powder size distribution and aspect ratio was determined by dynamic image analysis according to ISO 13322-2:2006. The resulting powder had a size distribution of D10= 23 µm, D50=32 µm and D90=43 µm. The aspect ratio was 0.88. Furthermore, the resulting powder showed a sphericity of 0.91 as determined according to ISO 9276-6:2008.

The resulting powder was thereafter printed to a plurality of bodies (described in more detail below) for the purpose of investigating properties after printing in as-built condition. All bodies were printed in the same process (i.e. at the same time) on a common building plate. Printing was performed by selective laser melting using a SLM 280. The process parameters used were laser power of 225 W, laser speed 675 mm/s, layer thickness 30 µm, and hatch distance 0.12 mm.

For the purpose of tensile testing, printing was made to bodies having a cylindrical shape with a diameter of 12mm and a longitudinal extension of 90mm. Half of the cylindrical bodies were printed with a building direction along the longitudinal axis of the cylinder, and half of the cylindrical bodies were printed with a building direction along the radial direction of the cylinder. The cylindrical bodies were after printing machined to the configuration of the test samples. Tensile testing, in the as-built condition, was performed according to ISO 6892-1:2019. Table 2 discloses the average results of six samples (each taken from a respective printed body), together with the standard deviation.

For the purpose of testing impact toughness, printing was made to bodies having a rectangular shape with the dimensions 12x12x70 mm. Half of said rectangular bodies were printed with a building direction corresponding to the longest extension of the rectangular bodies, and half were printed with a building direction perpendicular to the longest extension of the rectangular bodies. The printed bodies were thereafter machined to the configuration of the samples used for testing. Impact toughness (Charpy V) was tested according to ISO 148-1:2016, at room temperature. Table 2 discloses the average results of six samples (each taken from a respective printed body), together with the standard deviation.

In Table 2, the test planes XY and XZ, respectively, represent the primary plane of fracture during testing. Test plane XY represents a plane parallel to the plane of the building plate used during printing and is thus a plane perpendicular to the building direction. Test plane XZ represents a plane which is perpendicular to the plane of the building plate used during printing and is thus a plane parallel with the building direction. Furthermore, test plane XZ is a plane which is perpendicular to the longest extension of the bodies which were printed with their longest extension parallel to the plane of the building plate. In other words, the tensile test result given for test plane XY represents the cylindrical bodies printed with a building direction along the longitudinal axis of the cylinder, whereas the result for test plane XZ represents the cylindrical bodies printed with a radial building direction. The tensile force is naturally applied in the direction of the longitudinal axis of the samples irrespectively of building direction. Similarly, the impact toughness result in the XY plane represents samples with a building direction corresponding to the longest extension of the rectangular bodies, and the result in XZ plane represents samples with a building direction perpendicular to the longest extension of the rectangular bodies.

**Table 2.**

| **Test plane** | **Yield strength Rp0.2 [MPa]** | **Tensile strength Rm [MPa]** | **Elongation A5 [MPa]** | **Charpy V [MPa]** |
|---|---|---|---|---|
| | Average ± Standard deviation | Average ± Standard deviation | Average ± Standard deviation | Average ± Standard deviation |
| XY | 1155 ± 22 | 1264 ± 8 | 15 ± 1 | 158 ± 7 |
| XZ | 1235 ± 6 | 1300 ± 5 | 14 ± 1 | 147 ± 4 |

Furthermore, hardness was tested according to ISO 6507-1:2018. A printed rectangular body with dimension 10x20x90 mm were used in the tests and hardness was determined at different positions along the build direction, which corresponds to the longest extension of the rectangular body. The average hardness of each of the samples was 359 HV.

The microstructure was investigated using Light Optical Microscopy (LOM). For this purpose, one rectangular body with dimension 10x20x90 mm was printed, with building direction along the longest extension of the body. Images at 50x magnifications were taken along the build direction and stitched together. For the purpose of examining porosity, the images were analyzed using the software ImageJ. The sample showed an area percentage of pores of 0.003%, which means that a relative density of 99.997% was obtained. The average size of the pores (Equivalent Circular Diameter ECD) was 4.33 µm, with a standard deviation of 0.40 µm. Moreover, it was found that the microstructure was martensitic with finely dispersed carbides.

It should be noted that although only one of Alloys 1-4 were subjected to printing, it is expected that substantially similar properties would be obtained in an as-build component irrespectively which one of the obtained powders are used in view of the similarity in composition and the result of the initial microscopic investigation, if sieved to same particle size distribution and printed with the same process parameters. Thus, the above specified results are considered representative for all of Alloys 1-4.

## Claims

1. A steel powder for use in additive manufacturing processes, the steel powder having the following composition in percent by weight (wt.-%):
| | |
|---|---|
| C | 0.15 - 0.26, |
| Si | 0.5 - 1.5, |
| Mn | 0.5 - 1.0, |
| Cr | 0.5 - 1.5, |
| Mo | 0.1 - 0.4, |
| N | 0.006 - 0.025, |
optionally V equal to or less than 0.15,
optionally Nb equal to or less than 0.03,
optionally Ti equal to or less than 0.02,
optionally B equal to or less than 0.005,
balance Fe and unavoidable impurities;
wherein the unavoidable impurities Ni, P and S are limited to:
| | |
|---|---|
| Ni | equal to or less than 0.15, |
| P | equal to or less than 0.03, and |
| S | equal to or less than 0.005. |

2. The powder according to claim 1, wherein the composition comprises 0.17 - 0.25 wt.-% C, preferably 0.18 - 0.24 wt.-% C.

3. The steel powder according to any one of claims 1 or 2, wherein the composition comprises 0.007 - 0.020 wt.-% N, preferably 0.008 - 0.016 wt.-% N.

4. The steel powder according to any one of the preceding claims, wherein the composition comprises 0.55 - 0.90 wt.% Mn, preferably 0.60 - 0.85 wt.-% Mn.

5. The steel powder according to any one of the preceding claims, wherein the composition comprises 0.6 - 1.2 wt.-% Si, preferably 0.85 - 1.15 wt.-% Si.

6. The steel powder according to any one of the preceding claims, wherein the composition comprises 0.8 - 1.3 wt.-% Cr, preferably 0.85 - 1.20 wt.-% Cr.

7. The steel powder according to any one of the preceding claims, wherein the composition comprises 0.05 - 0.15 wt.-% V, preferably 0.07- 0.12 wt.-% V.

8. The steel powder according to any one of the preceding claims, wherein the composition comprises 0.10-0.35 wt.-% Mo, preferably 0.15 - 0.35 wt.-% Mo.

9. The steel powder according to any one of the preceding claims, wherein the composition comprises equal to or less than 0.10 wt-% Ni.

10. The steel powder according to any one of the preceding claims, wherein the composition comprises equal to or less than 0.002 wt.% S.

11. The steel power according to any one of the preceding claims, wherein the steel powder is a nitrogen gas atomized powder.

12. The steel powder according to any one of the preceding claims, having a sphericity of at least 0.85 when determined according to ISO 9276-6:2008 and/or an aspect ratio of at least 0.75 determined after dynamic image analysis according to ISO 13322-2:2006.

13. The steel powder according to any one of the preceding claims, having a D90 particle size of less than 200 µm, preferably D90 of equal to or less than 150 µm, determined according to ISO 13322-2:2006.

14. Use of the steel powder according to any one of the preceding claims in the production of components by additive manufacturing, such as by directed energy deposition or laser powder bed fusion.

15. Method for producing a component comprising performing additive manufacturing using the steel powder according to any one of claims 1 to 13.
